# FASCICULE DE BREVET EUROPEEN

(11) **EP 0 540 375 B1**
(45) Date de publication et mention de la délivrance du brevet: **05.07.1995**
(21) Numéro de dépôt: 92402394.8
(22) Date de dépôt: 02.09.1992
(51) Int. Cl.: F02P 3/00, F02P 3/08

(54) **Générateur d'allumage haute énergie notamment pour turbine à gaz**
Zündungsgenerator mit einer hohen Energie, insbesondere für Gasturbinen
High energy ignition generator, especially for a gas turbine

(30) Priorité: 27.09.1991 FR 9111933
(43) Date de publication de la demande: 05.05.1993
(73) Titulaire: EYQUEM, Société dite:, F-92002 Nanterre (FR)
(72) Inventeur: Balland, Patrick, F-92500 Rueil Malmaison (FR)
(74) Mandataire: Habasque, Etienne Joel Jean-François

(56) Documents cités:
- WO-A-90/10154
- CH-A- 499 927
- DE-A- 2 606 890
- DE-C- 846 643
- FR-A- 2 149 929

## Description

La présente invention concerne un générateur d'allumage haute énergie notamment pour turbine à gaz.

On connait déjà dans l'état de la technique, un certain nombre de générateurs de ce type qui comportent une source d'énergie raccordée à un circuit de charge d'un condensateur de stockage d'énergie et des moyens de raccordement de ce condensateur à un circuit de décharge comportant en série des moyens à inductance de récupération d'énergie et une bougie d'allumage et aux bornes duquel sont connectés des moyens formant diode de roue libre, de manière à engendrer des étincelles entre les électrodes de la bougie, par décharge du condensateur dans la bougie à travers les moyens à inductance de récupération d'énergie et par décharge des moyens à inductance dans la bougie à travers les moyens formant diode de roue libre.

On pourra par exemple se reporter au document FR-A-2 636 678 déposé au nom de la Demanderesse pour une description plus complète du fonctionnement et de la commande de ce type de générateurs.

Dans ce type de générateurs, les moyens de raccordement sont constitués par un éclateur classique ou par des moyens de commutation à semi-conducteur pilotés, tels que des thyristors comme c'est le cas dans le document mentionné précédemment.

Cependant, dans ce dernier cas, la présence et le dimensionnement des moyens à inductance deviennent critiques par rapport à ces thyristors.

En effet, lors de la commutation de ceux-ci, un facteur important de fiabilité de l'ensemble est la limitation de la croissance du courant dans les thyristors et des pertes à la commutation.

L'emploi de ces thyristors a donc été jusqu'à présent conditionné par une limite de la puissance crête de l'étincelle entre les électrodes de la bougie.

En effet, le choix de moyens à inductance résultait d'un compromis entre la nécessité d'avoir une inductance de valeur élevée pour obtenir une limitation suffisante de la croissance du courant et la nécessité d'avoir une inductance de valeur faible pour obtenir une puissance d'étincelle importante.

On conçoit que ceci ne permet pas un fonctionnement optimal du générateur.

Le but de l'invention est donc de résoudre ces problèmes en proposant un générateur qui soit simple, fiable, et qui permette d'obtenir une puissance optimale d'étincelle.

A cet effet, l'invention a pour objet un générateur d'allumage haute énergie notamment pour turbine à gaz, du type tel que décrit précédemment, caractérisé en ce que les moyens à inductance comprennent au moins deux inductances et en ce que les moyens formant diode de roue libre forment des moyens de connexion desdites au moins deux inductances en série avec le condensateur lors de sa décharge et en parallèle aux bornes de la bougie lors de leur décharge.

Avantageusement, les deux inductances sont disposées de part et d'autre de la bougie et les moyens de connexion comprennent deux moyens formant diode de roue libre, en parallèle chacun sur la bougie et une inductance.

L'invention sera mieux comprise à l'aide de la description qui va suivre, donnée uniquement à titre d'exemple et faite en se référant aux dessins annexés, sur lesquels :
- la Fig.1 représente un schéma synoptique d'un premier mode de réalisation d'un générateur d'allumage selon l'invention;
- la Fig.2 représente un schéma synoptique d'un second mode de réalisation d'un générateur d'allumage selon l'invention; et
- la Fig.3 illustre la puissance obtenue aux bornes de la bougie en fonction du temps, à l'aide d'un générateur de l'état de la technique et à l'aide d'un générateur selon l'invention.

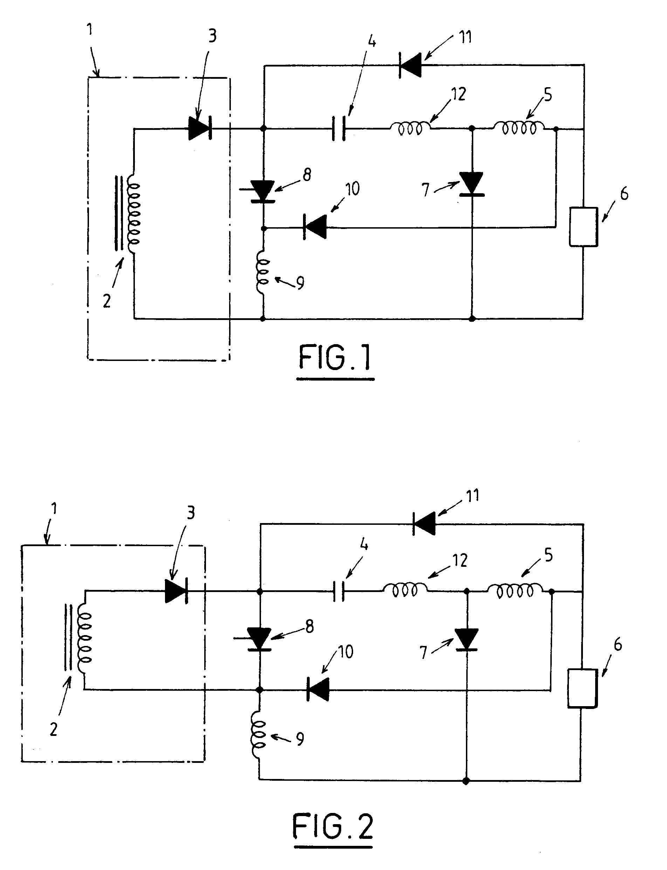

Ainsi qu'on peut le voir sur la Fig.1, qui représente un premier mode de réalisation d'un générateur selon l'invention, celui-ci comporte une source d'énergie classique désignée par la référence générale 1 comprenant par exemple un transformateur 2 associé à des moyens redresseurs à diode 3.

La borne positive de cette source d'énergie est raccordée à une borne d'un condensateur de stockage d'énergie 4 dont l'autre borne est reliée à une borne d'une première inductance 5.

L'autre borne de cette inductance 5 est reliée à une première borne d'une bougie d'allumage 6 dont une seconde borne est reliée à l'autre borne de la source d'alimentation, c'est à dire à la borne négative de celle-ci.

Une première diode de roue libre 7 est connectée en parallèle sur la première inductance 5 et la bougie d'allumage 6 pour permettre la charge du condensateur 4.

Des moyens de raccordement désignés par la référence 8 sur cette figure, sont également prévus. Leur fonction sera décrite plus en détail par la suite.

On notera cependant que ces moyens de raccordement comprennent par exemple des organes à thryristors.

Une borne de ces moyens de raccordement est reliée à la borne positive de la source d'énergie et une seconde inductance 9 est connectée entre l'autre borne de ces moyens de raccordement 8 et la seconde borne de la bougie d'allumage 6.

Une autre diode de roue libre 10 est connectée en parallèle aux bornes de la bougie et de cette seconde inductance 9.

Une troisième diode de roue libre 11 est connectée en parallèle aux bornes du condensateur 4 et de la première inductance 5 en amont de la bougie pour, comme cela sera décrit plus en détail par la suite, évacuer l'énergie stockée par l'inductance parasite de ce condensateur.

On conçoit donc que le condensateur 4 se charge sous la tension d'alimentation de la source d'énergie 1 à travers la diode de roue libre 7.

Une fois cette charge réalisée, et comme cela est décrit plus en détail dans le document mentionné précédemment, les moyens de raccordement 8 sont déclenchés pour engendrer des étincelles entre les électrodes de la bougie, premièrement par décharge du condensateur 4 dans la bougie d'allumage 6 à travers les moyens à inductance de récupération d'énergie 5 et 9, et deuxièmement par décharge des moyens à inductance 5 et 9 dans la bougie 6 à travers les moyens de roue libre correspondants 7 et 10, cette décharge résultant de l'application de la loi de LENZ, de manière connue en soi.

Alors que dans un générateur de l'état de la technique, une seule inductance est utilisée, dans le générateur selon l'invention, au moins deux inductances sont utilisées l'une en amont et l'autre en aval de la bougie et il est prévu des moyens de connexion de ces deux inductances, premièrement en série avec le condensateur 4 lors de sa décharge dans la bougie à la suite du déclenchement des moyens de raccordement, et deuxièmement en parallèle aux bornes de la bougie 6 lors de leur décharge dans la bougie.

On conçoit que le fait de connecter les deux inductances 5 et 9 en série avec le condensateur, la bougie et les moyens de raccordement lors de la décharge du condensateur, permet d'obtenir une croissance du courant limitée dans ce circuit et en particulier dans les moyens de raccordement à thyristors. Ces thyristors ne supportent en effet qu'une valeur limitée de croissance de courant.

Lors de la deuxième phase décrite précédemment, les inductances sont connectées en parallèle aux bornes de la bougie, grâce aux moyens formant diode de roue libre 7 et 10, une tension inverse à celle appliquée dans la première phase apparaissant aux bornes de ces inductances par application de la loi de LENZ, ce qui permet d'obtenir une puissance d'étincelle améliorée par rapport aux générateurs à inductance unique de l'état de la technique.

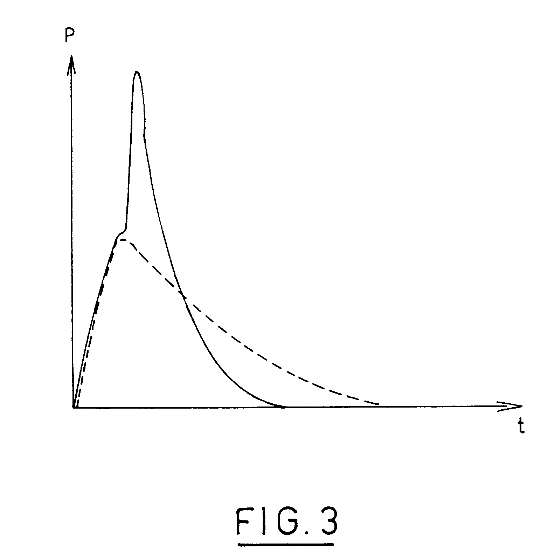

On peut en effet se reporter à la Fig.3 pour constater que si on utilise deux inductances de valeur unitaire correspondant environ à la moitié de la valeur d'une inductance utilisée dans l'état de la technique, on obtient une puissance crête d'étincelle aux bornes de la bougie, environ égale au double de celle obtenue grâce à un générateur à inductance unique.

Si l'on revient à la Fig.1, on peut également noter qu'une troisième inductance désignée par la référence 12 sur cette figure, et constituée au moins en partie par l'inductance parasite du condensateur, est connectée en série avec celui-ci, ce qui permet d'améliorer encore le fonctionnement du générateur.

On conçoit donc que le générateur selon l'invention permet de délivrer une puissance crête d'étincelle plus importante que celle délivrée par les générateurs de l'état de la technique et notamment ceux utilisant des thyristors comme moyens de raccordement, tout en conservant la même sollicitation dynamique en Di/Dt des composants critiques, comme le condensateur et les thyristors.

On notera que dans le cas où les deux inductances utilisées ont une valeur égale à la moitié de la valeur de l'inductance utilisée dans les générateurs de l'état de la technique, le courant crête IC dans la bougie, est environ deux fois plus important que celui délivré par un générateur de l'état de la technique.

On notera également que les inductances parasites des circuits ont pour effet de recharger le condensateur de stockage 4 en inverse.

Si on n'utilise pas de thyristors asymétriques dans les moyens de raccordement, c'est à dire possédant une diode en inverse, cette charge inverse peut être retransmise aux circuits.

La diode de roue libre 11 permet d'écouler cette charge et de protéger les circuits.

On notera également que les différentes inductances peuvent être bobinées l'une sur l'autre ou sur le même support car la valeur de la mutuelle induction étant proportionnelle au carré du nombre de spires et au diamètre intérieur de ces inductances, il faudra globalement moins de spires pour obtenir la même valeur d'inductance qu'en utilisant des inductances séparées.

Par ailleurs, ceci permet également un gain d'encombrement et une réduction des pertes résistives.

Dans le second mode de réalisation représenté sur la Fig.2, les composants identiques à ceux utilisés dans la Fig.1, portent les mêmes numéros de référence.

On constate que ce mode de réalisation présente un schéma de câblage identique au premier mode de réalisation à l'exception du fait qu'alors que dans le premier mode de réalisation, la borne négative de la source d'alimentation est connectée au point milieu entre la seconde inductance 9 et la bougie 6, dans le second mode de réalisation représenté sur cette Fig.2, la borne négative de la source d'alimentation est connectée au point milieu entre les moyens de raccordement 8, les moyens formant diode de roue libre 10 et la seconde inductance 9 en aval de la bougie.

Le premier mode de réalisation permet d'obtenir une référence de potentiel commune à la bougie.

Le dispositif selon l'invention permet donc une diminution de la contrainte sur les différents composants utilisés, une amélioration du rendement par une diminution des pertes par effet Joule et la modulation des valeurs respectives des inductances permet de trouver un bon compromis entre la puissance crête et la durée de l'étincelle.

Selon encore un autre mode de réalisation, les positions du condensateur 4 et du thyristor 8 peuvent être permutées, ce qui permet d'obtenir un circuit à polarité de sortie inversée. Bien entendu, dans ce cas, les moyens formant diode de roue libre doivent être inversés.

Dans les deux premiers modes de réalisation décrits, la charge de ce condensateur est assurée à travers une diode de roue libre tandis que dans le dernier mode de réalisation, le condensateur est relié directement à la source d'énergie.

## Revendications

1. Générateur d'allumage haute énergie notamment pour turbine à gaz du type comportant une source d'énergie (1) raccordée à un circuit de charge d'un condensateur de stockage d'énergie (4) et des moyens (8) de raccordement de ce condensateur à un circuit de décharge comportant en série des moyens à inductance (5,9) de récupération d'énergie et une bougie d'allumage (6) et aux bornes duquel sont connectés des moyens formant diode de roue libre (7,10), de manière à engendrer des étincelles entre les électrodes de la bougie, par décharge du condensateur dans la bougie à travers les moyens à inductance (5,9) de récupération d'énergie et par décharge des moyens à inductance dans la bougie à travers les moyens formant diode de roue libre, caractérisé en ce que les moyens à inductance comprennent au moins deux inductances (5,9) et en ce que les moyens formant diode de roue libre forment des moyens (7,10) de connexion desdites au moins deux inductances en série avec le condensateur (4) lors de sa décharge et en parallèle aux bornes de la bougie (6) lors de leur décharge.

2. Générateur selon la revendication 1, caractérisé en ce que les deux inductances (5,9) sont disposées de part et d'autre de la bougie (6) et en ce que les moyens de connexion comprennent deux moyens formant diode de roue libre (7,10) en parallèle chacun sur la bougie (6) et une inductance.

3. Générateur selon la revendication 1 ou 2, caractérisé en ce que les moyens de raccordement comprennent des moyens (8) de commutation à semi-conducteur pilotés et en ce que d'autres moyens formant diode de roue libre (11) sont connectés en parallèle aux bornes du condensateur (4) et de l'inductance (5) connectée en amont de la bougie d'allumage (6).

4. Générateur selon la revendication 3, caractérisé en ce que les moyens de commutation à semi-conducteur pilotés comprennent au moins un thyristor (8).

5. Générateur selon la revendication 3 ou 4, caractérisé en ce qu'une troisième inductance (12) formée au moins en partie par l'inductance parasite du condensateur de stockage d'énergie (4) est connectée en série avec celui-ci.

6. Générateur selon l'une quelconque des revendications précédentes, caractérisé en ce que les moyens formant diode de roue libre comprennent chacun au moins une diode (7,10, 11).

7. Générateur selon l'une quelconque des revendications précédentes, caractérisé en ce que les inductances sont bobinées sur le même support.

## Claims

1. High energy ignition generator, particularly for a gas turbine, of the type having an energy source (1) connected to a charging circuit of an energy storage capacitor (4) and means (8) for connecting said capacitor to a discharging circuit having in series energy recovery inductance means (5, 9) and a spark plug (6) and to whose terminals are connected means forming a freewheeling diode (7, 10), so as to produce sparks between the electrodes of the spark plug by discharging the capacitor into the spark plug across the energy recovery inductance means (5, 9) and by discharging the inductance means into the spark plug across the means forming the freewheeling diode, characterized in that the inductance means comprise at least two inductors (5, 9) and in that the means forming the freewheeling diode form means (7, 10) for connecting said at least two inductors in series with the capacitor (4) during its discharge and in parallel with the terminals of the spark plugs (6) during their discharge.

2. Generator according to claim 1, characterized in that the two inductors (5, 9) are positioned on either side of the spark plug (6) and in that the connection means comprise two means forming a freewheeling diode (7, 10), each in parallel with the spark plug (6) and an inductor.

3. Generator according to claim 1 or 2, characterized in that the connection means comprise controlled semiconductor switching means (8) and in that other means forming a freewheeling diode (11) are connected in parallel to the terminals of the capacitor (4) and the inductor (5) connected upstream of the spark plug (6).

4. Generator according to claim 3, characterized in that the controlled semiconductor switching means comprise at least one thyristor (8).

5. Generator according to claim 3 or 4, characterized in that a third inductor (12) at least partly formed by the parasitic inductor of the energy storage capacitor (4) is connected in series therewith.

6. Generator according to any one of the preceding claims, characterized in that the means forming the freewheeling diode in each case comprise at least one diode (7, 10, 11).

7. Generator according to any one of the preceding claims, characterized in that the inductors are coiled onto the same support.

## Patentansprüche

1. Zündgenerator hoher Energie, insbesondere für eine Gasturbine, mit einer Energiequelle (1), die an eine Schaltung zum Aufladen eines Kondensators zur Speicherung von Energie (4) angeschlossen ist, und mit Einrichtungen (8) zum Anschließen des Kondensators an eine Schaltung zum Entladen, die in Reihe Induktanzeinrichtungen (5, 9) zur Rückgewinnung von Energie und eine Zündkerze (6) aufweist und deren Anschlüsse an Einrichtungen angeschlossen sind, die eine Freilaufdiode (7, 10) bilden, so daß Zündfunken zwischen den Elektroden der Zündkerze erzeugt werden, um den Kondensator in der Zündkerze über die Induktanzeinrichtungen (5, 9) zur Rückgewinnung von Energie und die Induktanzeinrichtungen in der Zündkerze über die die Freilaufdiode bildenden Einrichtungen zu entladen, dadurch gekennzeichnet, daß die Induktanzeinrichtungen mindestens zwei Induktanzen (5, 9) aufweisen und daß die die Freilaufdiode bildenden Einrichtungen Verbindungseinrichtungen derselben (7, 10) mit mindestens zwei Induktanzen bilden, die während der Entladung des Kondensators (4) mit diesem in Reihe und während ihrer Entladung mit den Anschlüssen der Zündkerze (6) parallel geschaltet sind.

2. Generator nach Anspruch 1, dadurch gekennzeichnet, daß die beiden Induktanzen (5, 9) beiderseits der Zündkerze (6) angeordnet sind und daß die Verbindungseinrichtungen zwei eine Freilaufdiode bildende Einrichtungen (7, 10) umfassen, die jeweils parallel zur Zündkerze (6) und einer Induktanz geschaltet sind.

3. Generator nach Anspruch 1 oder 2, dadurch gekennzeichnet, daß die Anschlußeinrichtungen gesteuerte Halbleiter-Kommutationseinrichtungen (8) umfassen und daß die anderen Einrichtungen, die die Freilaufdiode (11) bilden, parallel zu den Anschlüssen des Kondensators (4) der Induktanz (5) geschaltet sind, die sich stromauf von der Zündkerze (6) befindet.

4. Generator nach Anspruch 3, dadurch gekennzeichnet, daß die gesteuerten Halbleiter-Kommutationseinrichtungen mindestens einen Thyristor (8) umfassen.

5. Generator nach Anspruch 3 oder 4, dadurch gekennzeichnet, daß eine dritte Induktanz (12), die zumindest teilweise durch die parasitäre Induktanz des Kondensators (4) zur Speicherung von Energie gebildet wird, in Reihe mit diesem geschaltet ist.

6. Generator nach einem der vorangehenden Ansprüche, dadurch gekennzeichnet, daß die die Freilaufdiode bildenden Einrichtungen jeweils mindestens eine Diode (7, 10, 11) umfassen.

7. Generator nach einem der vorangehenden Ansprüche, dadurch gekennzeichnet, daß die Induktanzen auf den gleichen Träger gewickelt sind.
